# EUROPEAN PATENT SPECIFICATION

(11) **EP 3 700 290 B1**
(45) Date of publication and mention of the grant of the patent: **20.12.2023**
(21) Application number: 18867566.4
(22) Date of filing: 31.08.2018
(51) Int. Cl.: H04W 4/20, H04W 4/80, H04W 76/10

(54) **WIRELESS COMMUNICATION DEVICE, WIRELESS COMMUNICATION METHOD, AND COMPUTER PROGRAM**
DRAHTLOSKOMMUNIKATIONSVORRICHTUNG, DRAHTLOSKOMMUNIKATIONSVERFAHREN UND COMPUTERPROGRAMM
DISPOSITIF DE COMMUNICATION SANS FIL, PROCÉDÉ DE COMMUNICATION SANS FIL ET PROGRAMME D'ORDINATEUR

(30) Priority: 20.10.2017 JP 2017203854
(43) Date of publication of application: 26.08.2020
(73) Proprietor: Sony Semiconductor Solutions Corporation, Atsugi-shi, Kanagawa 243-0014 (JP)
(72) Inventor: NISHIYAMA, Fumihiro, Atsugi-shi Kanagawa 243-0014 (JP); KONDOU, Keitarou, Atsugi-shi Kanagawa 243-0014 (JP)
(74) Representative: Witte, Weller & Partner Patentanwälte mbB
(86) International application number: PCT/JP2018/032443
(87) International publication number: WO 2019/077894

(56) References cited:
- JP-A- 2008 219 358
- JP-A- 2011 228 955
- US-A1- 2008 109 302
- US-A1- 2008 279 560
- US-A1- 2010 111 054

## Description

### Technical Field

The present disclosure relates to a wireless communication device, a wireless communication method, and a computer program.

### Background Art

In recent years, a new communication method has undergone development which is to increase the communication speed of wireless communication using high frequency electromagnetic waves referred to as millimeter waves. In addition, a technique that utilizes the communication method using millimeter waves has also been proposed (see PTL 1 or the like). Millimeter waves have a wavelength of 10 mm to 1 mm and a frequency of 30 GHz to 300 GHz, allowing channel allocation in GHz in, for example, but not limited to, the 60 GHz band or the like.

Furthermore, wireless communication includes a connection-oriented protocol and a connectionless protocol. Switching between the connection-oriented protocol and the connectionless protocol is described in PTLs 2 to 5, for example.

### Citation List

### Patent Literature

PTL 1: Japanese Unexamined Patent Application Publication No. 2015-207799
PTL 2: Japanese Unexamined Patent Application Publication No. 2000-25299
PTL 3: Japanese Unexamined Patent Application Publication No. 2001-237884
PTL 4: Japanese Unexamined Patent Application Publication No. 2002-158736
PTL 5: Japanese Unexamined Patent Application Publication No. 2006-345095
US 2008/109302 A1 discloses a system for conveying wireless information between an advertising device (advertiser) and another wireless communication device (receiving device). The advertiser's broadcast signal (advertisement) may inform the receiving device that information is available from the advertiser without the requirement of establishing a formal network connection. This information may be then be conveyed, by request, to the receiving device. Further, the advertising device may, in some instances, continue to broadcast to other receiving devices even though it is already engaged in a formal network connection with a receiving device.
US 2008/279560 A1 discloses a transmitter which transmits a predetermined amount of transfer data using an infrared ray including: a controller for transmitting an SNRM command to the other station without transmitting a station-search command for searching the other station, the SNRM command including parameters such as maximum transferable speed and maximum receivable data length of the transmitter; and a transmission section. Consequently, it is possible to shorten a time necessary for a connection between the transmitter and the receiver. This allows shortening a time from the start of communication to the end of the communication in transmitting information data.

### Summary of the Invention

### Problems to be Solved by the Invention

According to the above-described technique, respective independent data transfer protocols are necessary to achieve connection-oriented data transfer and connectionless data transfer. This gives rise to an increase in program and circuit sizes and an increase in power consumption. In addition, this also complicates protocol procedures for data transfer.

The present disclosure therefore proposes a novel and improved wireless communication device, a novel and improved wireless communication method, and a novel and improved computer program that are able to achieve the two protocols of a connection-oriented protocol and a connectionless protocol without implementing the two protocols.

### Means for Solving the Problems

According to the present disclosure, there are provided wireless communication devices, wireless communication methods and a computer program as defined in the claims.

### Effects of the Invention

As described above, according to the present disclosure, it is possible to provide a novel and improved wireless communication device, a novel and improved wireless communication method, and a novel and improved computer program that are able to achieve the two protocols of a connection-oriented protocol and a connectionless protocol without implementing the two protocols.

It is to be noted that the above-described effects are not necessarily limitative. Any of the effects indicated in this description or other effects that may be understood from this description may be exerted in addition to the above-described effects or in place of the above-described effects.

### Brief Description of Drawing

[FIG. 1] FIG. 1 is an explanatory diagram illustrating an example of a wireless communication system including a wireless communication device according to an embodiment of the present disclosure.
[FIG. 2] FIG. 2 is an explanatory diagram illustrating a functional configuration example of a wireless communication device 100 according to the embodiment.
[FIG. 3] FIG. 3 is a flowchart illustrating a basic procedure of IEEE 802.15.3e.
[FIG. 4] FIG. 4 is a flowchart illustrating an operation example of wireless communication devices 100 and 200 according to the embodiment.
[FIG. 5] FIG. 5 is an explanatory diagram illustrating an example of temporal. relationship between a beacon frame that is outputted by the wireless communication device 100 (PRC) and an Association Request that is outputted by the wireless communication device 200 (nonPRC).
[FIG. 6] FIG. 6 is an explanatory diagram illustrating a portion of a format of a beacon frame and an Association Request frame in a simplified manner.
[FIG. 7] FIG. 7 is a flowchart illustrating an operation example of the wireless communication device 100 according to the embodiment.
[FIG. 8] FIG. 8 is a flowchart illustrating an operation example of the wireless communication device 200 according to the embodiment.
[FIG. 9] FIG. 9 is a flowchart illustrating an operation example of the wireless communication devices 100 and 200 according to the embodiment.
[FIG. 10] FIG. 10 is a flowchart illustrating an operation example of the wireless communication devices 100 and 200 according to the embodiment.

### Modes for Carrying Out the Invention

The following describes a preferred embodiment of the present disclosure in detail with reference to the accompanying drawings. It is to be noted that, in this description and the accompanying drawings, components that have substantially the same functional configuration are indicated by the same reference signs, and thus redundant description thereof is omitted.

It is to be noted that the description is given in the following order.
1. Embodiment of the Present Disclosure
   1.1. Overview
   1.2. Configuration Example
   1.3. Operation Example
2. Conclusion

### <1. Embodiment of the Present Disclosure>

### [1.1. Overview]

First, an overview of an embodiment of the present disclosure is described before the embodiment of the present disclosure is described in detail.

In recent years, a new communication method has undergone development which is to increase the communication speed of wireless communication using high frequency electromagnetic waves referred to as millimeter waves. In addition, a technique that utilizes the communication method (millimeter wave communication) using millimeter waves has also been proposed. Millimeter waves have a wavelength of 10 mm to 1 mm and a frequency of 30 GHz to 300 GHz, allowing channel allocation in GHz in, for example, but not limited to, the 60 GHz band or the like.

In general, millimeter waves characteristically have a high tendency to travel in straight lines and attenuate much when reflected as compared to microwaves. A pathway of wireless communication according to the millimeter wave communication is therefore mainly formed with direct waves or waves reflected approximately once. In addition, millimeter waves also characteristically have a greater free space propagation loss (a shorter electric wave arrival distance). Wireless communication using millimeter waves therefore provides a shorter communication distance, while advantageously allowing easy space division as compared to wireless communication using microwaves.

To compensate for such a weakness of millimeter waves and make use of high-speed wireless communication with millimeter waves in a greater variety of situations, a general wireless system gives directionalities to antennas of transmitting and receiving devices and directs each of transmit beams and receive beams toward a position of a communication partner to increase the communication distance (beamforming). However, in a case where one or both of transmitting and receiving terminals are moving objects, it is necessary to increase the speed of pursuit in beamforming and expand the directional range in beamforming. Furthermore, the terminals consume a large amount of power to execute algorithms for determining the directionalities.

There has been a movement to apply millimeter wave communication to short-range communication by taking advantage of the characteristic of a shorter communication distance among the above-described characteristics. For example, the standards IEEE 802.15.3e and IEEE 802.11ay have been discussed for main use in content download at station stands and during passage through gates such as automatic ticket gates in a station and ETC (Electronic Toll Collection System) gates, and high-speed file transfer between wireless terminals.

Furthermore, wireless communication includes a connection-oriented protocol and a connectionless protocol. A large number of literatures are also disclosed that describe switching between the connection-oriented protocol and the connectionless protocol.

However, respective independent data transfer protocols are necessary to achieve connection-oriented data transfer and connectionless data transfer. This gives rise to an increase in program and circuit sizes and an increase in power consumption. In addition, this also complicates protocol procedures for data transfer. Speedy communication is necessary especially at the time of passage through automatic ticket gates as described above in a station. Accordingly, connection-oriented data transfer is quite inefficient.

In view of the above-described points, therefore, the discloser of the present application has intensively studied a technique that enables the two protocols of a connection-oriented protocol and a connectionless protocol to be achieved without implementing the two protocols. As a result, the discloser of the present application has devised a technique that enables the two protocols of a connection-oriented protocol and a connectionless protocol to be achieved with one protocol as described below.

The above describes the overview of the embodiment of the present disclosure. The following describes the embodiment of the present disclosure in detail.

### [1.2. Configuration Example]

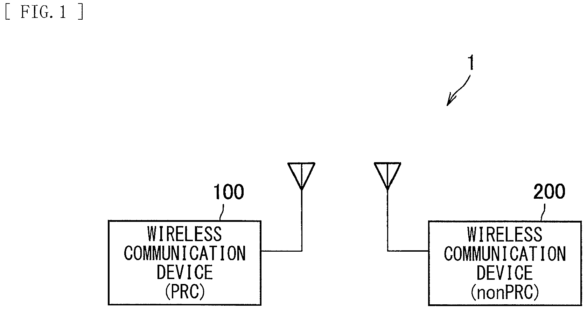

FIG. 1 is an explanatory diagram illustrating an example of a wireless communication system including a wireless communication device according to the embodiment of the present disclosure. The following describes the wireless communication system including the wireless communication devices according to the embodiment of the present disclosure with the use of FIG. 1.

The wireless communication system illustrated in FIG. 1 is a system that transmits and receives data using, in particular, electric waves in the millimeter wave band. A wireless communication system 1 illustrated in FIG. 1 includes wireless communication devices 100 and 200. The wireless communication device 100 in the wireless communication system illustrated in FIG. 1 is, for example, a device provided in an automatic ticket gate (or in the vicinity of an automatic ticket gate) in a station. Furthermore, the wireless communication device 200 is a device such as a mobile phone, a smartphone, or a wearable computer carried by a user who passes through an automatic ticket gate or the like in a station, for example.

The wireless communication devices 100 and 200 transmit and receive data to and from each other through wireless communication using a predetermined frequency band. The wireless communication herein, for example, means wireless communication using the millimeter wave band. Furthermore, in the following description, the wireless communication device 100 may also be referred to as "PRC", and the wireless communication device 200 may also be referred to as "nonPRC".

The following describes a functional configuration example of the wireless communication devices 100 and 200 according to the embodiment of the present disclosure. Here, the functional configuration example of the wireless communication device 100 is described.

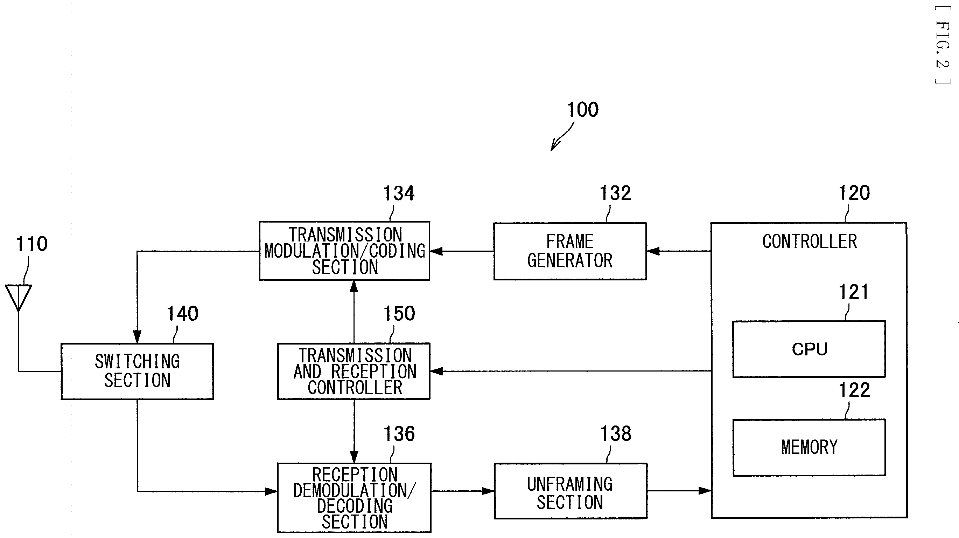

FIG. 2 is an explanatory diagram illustrating a functional configuration example of the wireless communication device 100 according to the embodiment of the present disclosure. The following uses FIG. 2 to describe a functional configuration example of the wireless communication device 100 according to the embodiment of the present disclosure.

As illustrated in FIG. 2, the wireless communication device 100 according to the embodiment of the present disclosure includes an antenna 110, a controller 120, a frame generator 132, a transmission modulation/coding section 134, a reception demodulation/decoding section 136, an unframing section 138, a switching section 140, and a transmission and reception controller 150.

The antenna 110 sends an RF signal (a Radio Frequency signal) superimposed on a carrier having a predetermined frequency as a transmit signal from the wireless communication device 100. In addition, the antenna 110 receives the transmit signal superimposed on the carrier having the above-described predetermined frequency from the wireless communication device 200.

The controller 120 controls operation of each of the sections of the wireless communication device 100. The controller 120 includes CPU (Central Processing Unit) 122 and a storage unit 124. The CPU 122 controls operation of each of the sections of the wireless communication device 100 on the basis of computer programs and data stored in the storage unit 124. The storage unit 124, for example, includes a storage device such as ROM (Read Only Memory) and RAM (Random Access Memory), and stores the computer programs to be read and executed in sequence by the CPU 122 and various types of data to be referred to by the CPU 122.

According to the present embodiment, the controller 120 performs a process of executing connectionless data transfer using a portion of a connection-oriented protocol as described below. The use of a portion of the connection-oriented protocol enables the controller 120 to achieve the two protocols of a connection-oriented protocol and a connectionless protocol without implementing the two protocols of the connection-oriented protocol and the connectionless protocol. The controller 120 then executes connectionless data transfer using a portion of the connection-oriented protocol on the basis of data transmitted from the unframing section 138.

The frame generator 132 generates a frame to be transmitted as a transmit signal from the wireless communication device 100 on the basis of a predetermined frame format.

The transmission modulation/coding section 134 modulates the frame generated by the frame generator 132 on the basis of a predetermined modulation scheme and encodes the frame on the basis of a predetermined encoding scheme. Examples of modulation schemes include 256 QAM (Quadrature Amplitude Modulation), 64 QAM, 16 QAM, QPSK (Quadrature Phase Shift Keying) modulation, BPSK (Binary Phase Shift Keying) modulation, and the like.

The reception demodulation/decoding section 136 executes a demodulation process on a signal received by the antenna 110 on the basis of a scheme corresponding to the above-described modulation scheme adopted in the transmission modulation/coding section 134 and further performs a decoding process on the signal

The unframing section 138 executes a process of unframing the signal demodulated and decoded by the reception demodulation/decoding section 136 on the basis of a predetermined frame format. The reception demodulation/decoding section 136 and the unframing section 138 may, for example, function as an example of an acquisition section of the present disclosure.

The switching section 140 switches signal transmission and reception. The switching section 140 switching signal transmission and reception makes it possible to prevent signals from the transmission modulation/coding section 134 from flowing into the reception demodulation/decoding section 136 and prevent signals received by the antenna 110 from flowing into the transmission modulation/coding section 134.

The transmission and reception controller 150 controls operation of the transmission modulation/coding section 134 and the reception demodulation/decoding section 136 on the basis of control by the controller 120.

FIG. 2 has been used above to describe a functional configuration example of the wireless communication device 100 according to the embodiment of the present disclosure. The following describes operation examples of the wireless communication device 100 and the wireless communication device 200 according to the embodiment of the present disclosure.

### [1.3. Operation Example]

Basic procedures of IEEE 802.15.3e are described before the operation examples of the wireless communication device 100 and the wireless communication device 200 according to the embodiment of the present disclosure are described.

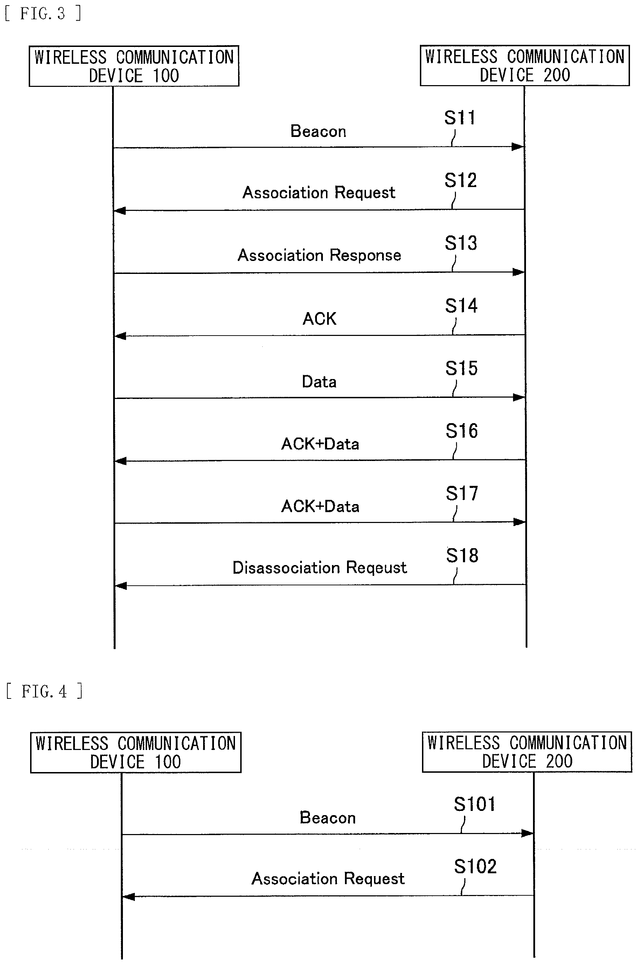

FIG. 3 is a flowchart illustrating the basic procedures of IEEE 802.15.3e, illustrating a flow of operation of the wireless communication device 100 and the wireless communication device 200 according to the basic procedures.

The wireless communication device 100 outputs beacons at predetermined intervals (step S11). In a case where the wireless communication device 200 enters a range where the beacons outputted by the wireless communication device 100 are receivable and the wireless communication device 200 starts communication with the wireless communication device 100, the wireless communication device 200 transmits an Association Request to the wireless communication device 100 (step S12). Upon receiving the Association Request, the wireless communication device 100 transmits an Association Response to the wireless communication device 200 (step S13). Upon successfully receiving the Association Response, the wireless communication device 200 transmits ACK to the wireless communication device 100 (step S14). Steps S11 to S14 are a connection establishment procedure.

Upon receiving the ACK from the wireless communication device 200, the wireless communication device 100 transmits data to the wireless communication device 200 (step S15). Upon receiving the data from the wireless communication device 100, the wireless communication device 200 transmits, to the wireless communication device 100, ACK indicating the successful reception (step S16). In addition, the wireless communication device 200 transmits data to the wireless communication device 100 as necessary when transmitting the ACK. Upon receiving the ACK and the data from the wireless communication device 200, the wireless communication device 100 transmits, to the wireless communication device 200, ACK indicating the successful reception (step S17). In addition, the wireless communication device 100 transmits data to the wireless communication device 200 as necessary when transmitting the ACK.

Upon determining that transmission and reception of data are completed, the wireless communication device 200 transmits a Disassociation Request to the wireless communication device 100 (step S18). Upon receiving the Disassociation Request, the wireless communication device 100 completes wireless communication with the wireless communication device 200. These steps S15 to S17 are a data exchange procedure.

As described above, the basic procedures of IEEE 802.15.3e include the connection establishment procedure and the data exchange procedure, which are executed in the stated order. However, even transmission of a very little information of, for example, several bytes takes time to complete communication by going through such procedures. There is a strong demand to shorten as much time as possible to complete communication especially in a case where it is necessary to complete communication within a very short period of time such as passing through an automatic ticket gate or an ETC gate.

The present embodiment is therefore characterized in that even data transmission is completed in the connection establishment procedure. Completing even data transmission in the connection establishment procedure allows for a great reduction in time to complete communication.

FIG. 4 is a flowchart illustrating an operation example of the wireless communication devices 100 and 200 according to the embodiment of the present disclosure.

The wireless communication device 100 outputs beacons at predetermined intervals (step S101). According to the present embodiment, data is stored in a beacon frame transmitted by this wireless communication device 100. Specifically, the wireless communication device 100 stores data in a reserved field or an Information Element in the beacon frame. Here, the wireless communication device 100 assigns data to the reserved field or the Information Element in the beacon frame. The data is used to issue a notification indicating that only the steps up to the Association Request step are performed, and a response thereto is made in an Association Response frame.

In a case where the wireless communication device 200 enters a range where the beacons outputted by the wireless communication device 100 are receivable and the wireless communication device 200 starts communication with the wireless communication device 100, the wireless communication device 200 transmits an Association Request to the wireless communication device 100 (step S102). According to the present embodiment, data is stored in an Association Request frame when this frame is transmitted.

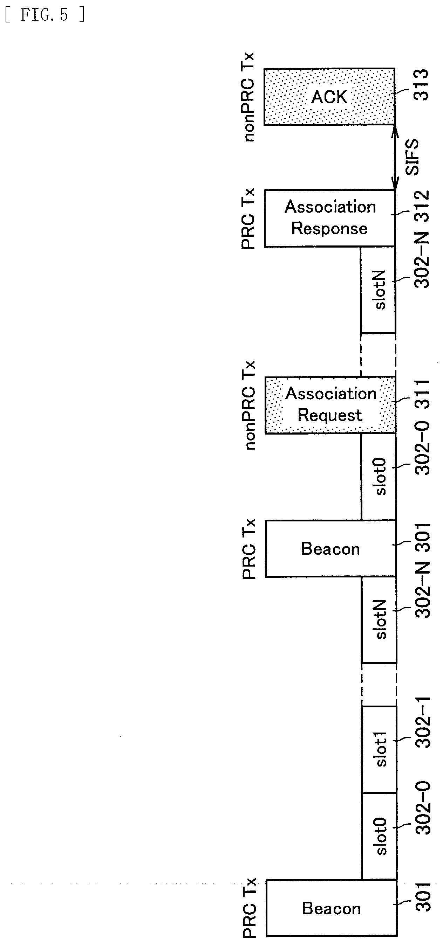

FIG. 5 is an explanatory diagram illustrating an example of temporal relationship between a beacon frame that is outputted by the wireless communication device 100 (PRC) and an Association Request that is outputted by the wireless communication device 200 (nonPRC). The wireless communication device 100 outputs beacon frames 301 in predetermined periods. There are N+1 slots 302-0 to 302-N between the beacon frames 301. The wireless communication device 200 outputs an Association Request 311 using one of the slots. The wireless communication device 100 outputs an Association Response 312 after the (N+1)-th slot 302-N. ACK 313 is outputted a certain time (SIFS: Short Inter Frame Space) after the Association Response 312.

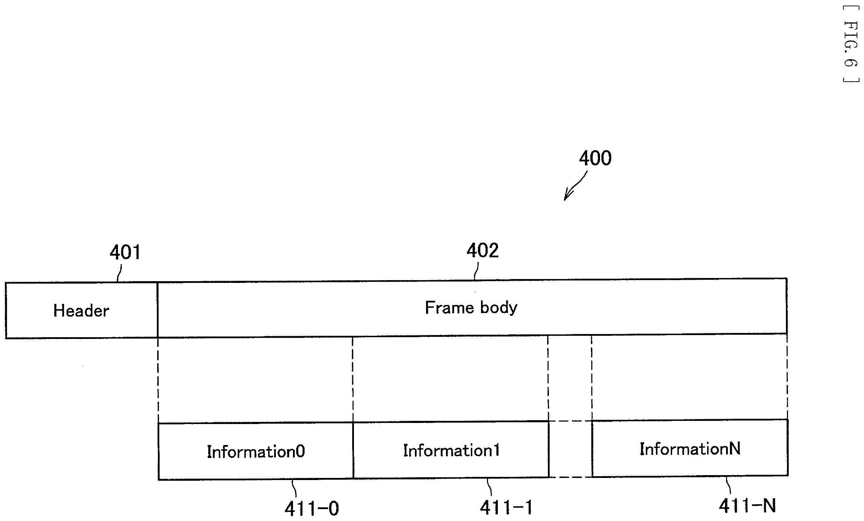

FIG. 6 is an explanatory diagram illustrating a portion of a format of a beacon frame and an Association Request frame in a simplified manner. A frame 400 illustrated in FIG. 6 has a header region 401 and a frame body region 402. The frame body region 402 has N+1 Information Elements 411-0 to 411-N.

The wireless communication device 100 stores data in any of the predetermined Information Elements 411-0 to 411-N of the frame body region 402 in the beacon frame, and transmits the data. The wireless communication device 200 then stores data in any of the predetermined Information Elements 411-0 to 411-N of the frame body region 402 in the Association Request frame, and transmits the data.

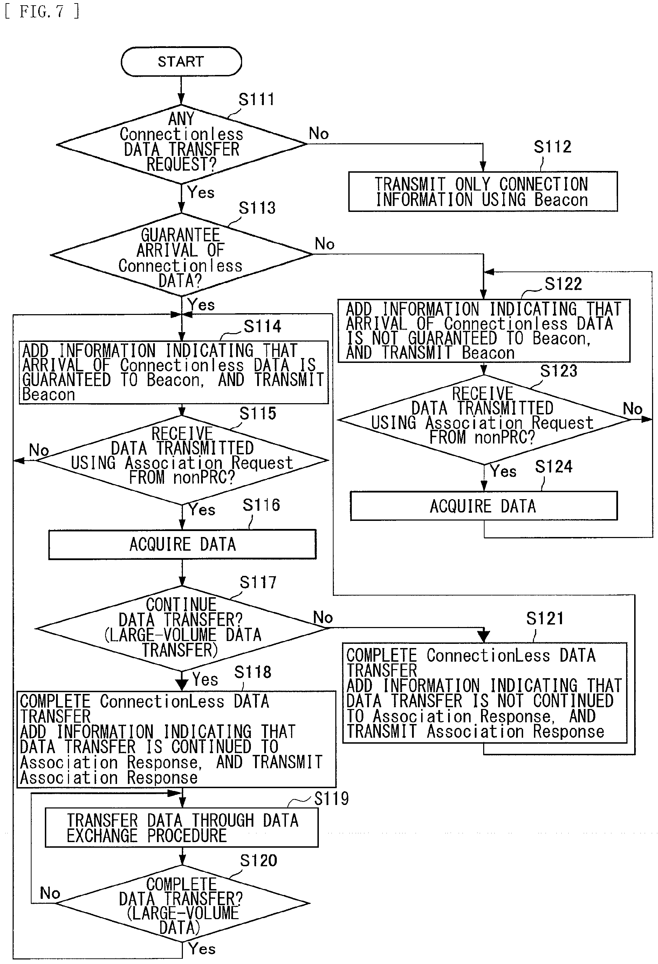

FIG. 7 is a flowchart illustrating an operation example of the wireless communication device 100 according to the embodiment of the present disclosure, illustrating an operation example of a case where the wireless communication device 100 transmits data to the wireless communication device 200.

The wireless communication device 100 determines whether or not a connectionless data transfer request is received from an upper layer, for example (step S111). The controller 120, for example, the CPU 122 makes this determination. If a connectionless data transfer request is not received (No at step S111), the wireless communication device 100 executes connection-oriented data transfer (step S112).

In contrast, if a connectionless data transfer request is received (Yes at step S111), the wireless communication device 100 determines whether or not data to be transmitted is connectionless data and arrival of the data is guaranteed (step S113). The controller 120, for example, the CPU 122 makes this determination.

If the data to be transmitted is connectionless data and arrival of the data is guaranteed (Yes at step S113), the wireless communication device 100 adds, to a beacon, information indicating that the data to be transmitted is connectionless data and arrival of the data is guaranteed, and transmits the beacon (step S114). The wireless communication device 100 then stands by until data transmitted using an Association Request is received from the nonPRC, which in other words is the wireless communication device 200 (step S115). Upon receiving the data transmitted using the Association Request from the wireless communication device 200 (Yes at step S115), the wireless communication device 100 acquires the data included in the Association Request frame (step S 116).

Thereafter, the wireless communication device 100 determines whether or not to continue data transfer to the wireless communication device 200 (step S 117). The controller 120, for example, the CPU 122 makes this determination. This determination is, for example, a determination as to whether or not it is necessary to transfer a large volume of data to the wireless communication device 200. If it is determined that data transfer to the wireless communication device 200 is continued (Yes at step S117), the wireless communication device 100 completes the connectionless data transfer, further adds, to an Association Response, information indicating that data transfer is continued, and transmits the Association Response to the wireless communication device 200 (step S 118). Thereafter, the wireless communication device 100 executes data transfer (step S 119) through the data exchange procedure illustrated in FIG. 3 until the data transfer is completed (step S120). Once the data transfer is completed (Yes at step S120), the wireless communication device 100 returns to the process of step S 114 described above.

In contrast, if it is determined that data transfer to the wireless communication device 200 is not continued (No at step S 117), the wireless communication device 100 completes the connectionless data transfer, further adds, to an Association Response, information indicating that data transfer is not continued, and transmits the Association Response to the wireless communication device 200 (step S121). Once transmission of the Association Response is then completed, the wireless communication device 100 returns to the process of step S 114 described above.

If the data to be transmitted is connectionless data and arrival of the data is not guaranteed in the determination of step S 113 described above (No at step S113), the wireless communication device 100 adds, to a beacon, information indicating that the data to be transmitted is connectionless data and arrival of the data is not guaranteed, and transmits the beacon (step S 122). The wireless communication device 100 then stands by until data transmitted using an Association Request is received from the nonPRC, which in other words is the wireless communication device 200 (step S123). Upon receiving the data transmitted using the Association Request from the wireless communication device 200 (Yes at step S115), the wireless communication device 100 acquires the data included in the Association Request frame (step S124). Then, upon acquiring the data from the wireless communication device 200, the wireless communication device 100 returns to the process of step S122 described above.

The following describes an operation example of the wireless communication device 200.

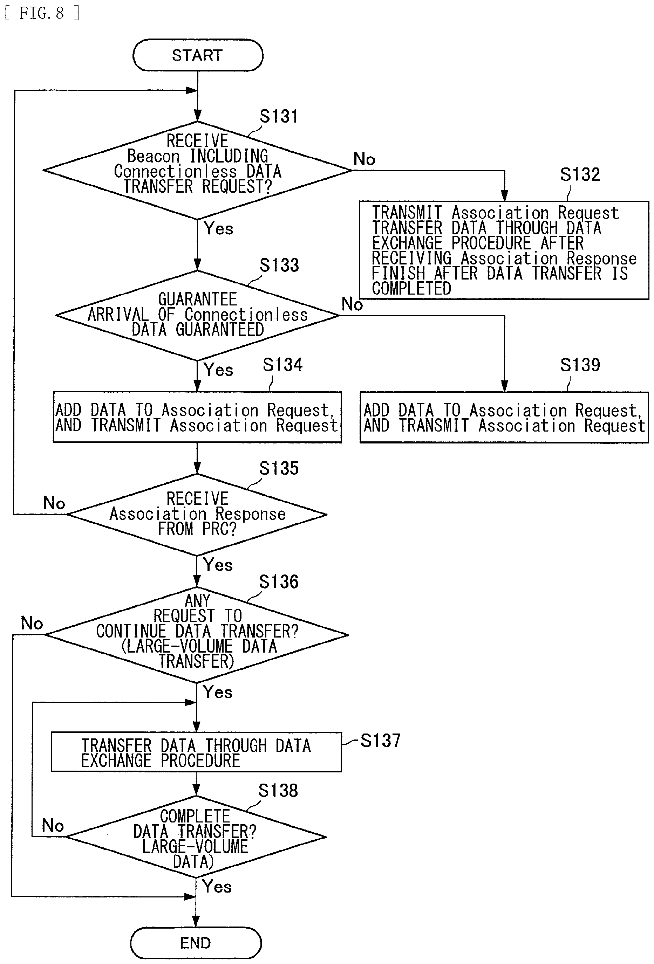

FIG. 8 is a flowchart illustrating an operation example of the wireless communication device 200 according to the embodiment of the present disclosure, illustrating an operation example of a case where the wireless communication device 200 transmits data to the wireless communication device 100.

The wireless communication device 200 determines whether or not a beacon including a connectionless data transfer request is received from the wireless communication device 100 (step S131). In a case where a beacon including no connectionless data transfer request is received from the wireless communication device 100 (No at step S131), the wireless communication device 200 transmits an Association Request to the wireless communication device 100. Then, upon receiving an Association Response from the wireless communication device 100, the wireless communication device 200 receives data transferred through the data exchange procedure illustrated in FIG. 3, and finishes the series of communication processes once the data transfer is completed (step S132).

In contrast, in a case where a beacon including a connectionless data transfer request is received from the wireless communication device 100 (Yes at step S131), the wireless communication device 200 further determines whether or not arrival of the data at the wireless communication device 200 is guaranteed (step S133). The wireless communication device 200 determines whether or not arrival of the data at the wireless communication device 200 is guaranteed, on the basis of information included in the beacon.

If arrival of the data from the wireless communication device 100 at the wireless communication device 200 is guaranteed (Yes at step S133), the wireless communication device 200 adds the data to an Association Request and transmits the Association Request (step S134). The wireless communication device 200 then determines whether or not an Association Response is received from the PRC, which in other words is the wireless communication device 100 (step S135). If an Association Response is received from the wireless communication device 100 (Yes at step S135), it is further determined whether or not to continue to receive data from the wireless communication device 100 (step S136). In a case where the wireless communication device 200 continues to receive data (Yes at step S136), the wireless communication device 200 receives data transferred from the wireless communication device 100 through the data exchange procedure illustrated in FIG. 3 (step S137). Once the data transfer is completed (Yes at step 138), the wireless communication device 200 finishes the communication process.

It is to be noted that the wireless communication device 200 returns to the beacon reception process of step S131 described above if no Association Response is received from the wireless communication device 100 in step S135 described above (No at step S135).

As described above, the wireless communication devices 100 and 200 are able to achieve connectionless data transfer by executing part of the connection procedure of IEEE 802.15.3e (i.e., without executing the connection procedure through to the end). It is therefore unnecessary for the wireless communication devices 100 and 200 to implement the two data transfer protocols of a connection-oriented data transfer protocol and a connectionless data transfer protocol. Furthermore, the wireless communication device 200 transmits an Association Request frame in a case where beacons periodically transmitted from the wireless communication device 100 are received. This produces an effect of data retransmission, allowing highly reliable data transfer even in the case of connectionless data transfer.

An IEEE 802.15.3e pairnt mode offers a random access slot prepared to avoid a collision between Association Requests in a case where a plurality of nonPRCs returns Association Requests in response to a transmitted beacon in the connection procedure. According to the embodiment of the present disclosure, appropriately setting this random access slot allows responses to a beacon transmitted once to be obtained from a plurality of terminals.

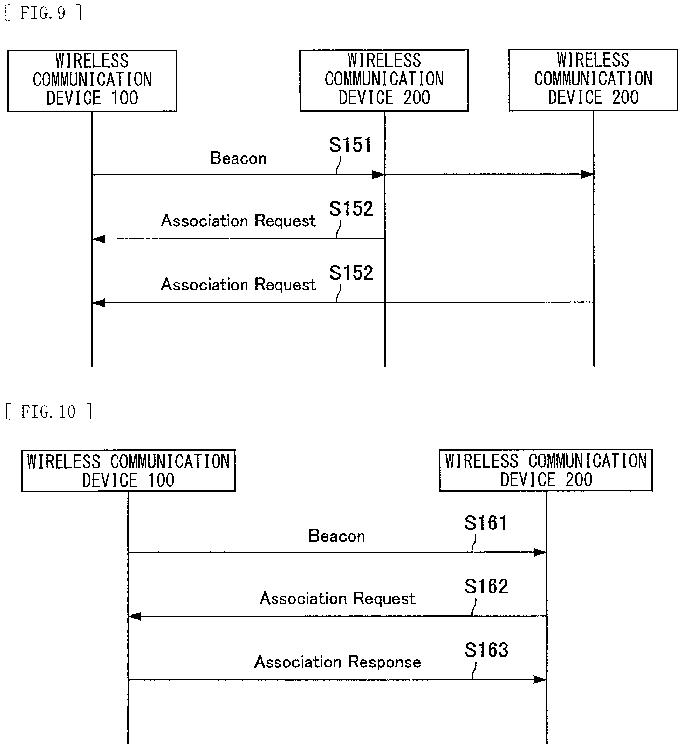

FIG. 9 is an explanatory diagram illustrating an operation example of the wireless communication devices 100 and 200 according to the embodiment of the present disclosure. FIG. 9 is an explanatory diagram illustrating an example of a case where a plurality of wireless communication devices 200 returns Association Requests. The wireless communication device 100 transmits a beacon (step S151). Upon receiving the beacon, the two wireless communication devices 200 return Association Requests, respectively (steps S152 and S153).

The wireless communication device 100 according to the embodiment of the present disclosure is able to efficiently obtain data responses from a plurality of terminals by appropriately setting a random access slot, making it possible to achieve high-speed processing and power saving in the wireless communication devices 100 and 200.

In the above-described example, data transfer is achieved through the procedures up to transmission of an Association Request. However, performing up to the transmission of an Association Response in the connection procedure makes it possible to guarantee arrival of an Association Request frame, making it possible to achieve simple connection-oriented data transfer.

FIG. 10 is an explanatory diagram illustrating an operation example of the wireless communication devices 100 and 200 according to the embodiment of the present disclosure. In the operation example, the wireless communication device 100 transmits an Association Response to the wireless communication device 200 when the wireless communication device 200 returns an Association Request.

The wireless communication device 100 transmits a beacon (step S161). Upon receiving the beacon, the wireless communication device 200 returns an Association Requests (step S162). The wireless communication device 100 returns an Association Response to the wireless communication device 200 (step S163). Performing up to transmission of this Association Response allows the wireless communication device 100 to guarantee arrival of an Association Request frame.

When performing up to transmission of an Association Response in the connection procedure, the wireless communication device 100 may include, in a beacon, information (e.g., a flag or the like) indicating that the up to transmission of an Association Response is performed.

It is to be noted that the communication method according to the present embodiment is applicable to a system (e.g., ISO/IEC 17568) adopting a connection procedure similar to that of the IEEE 802.15.3e pairnet mode.

### <2. Conclusion>

According to the embodiment of the present disclosure, as described above, it is possible to provide the wireless communication devices 100 and 200 that are able to achieve the two protocols of a connection-oriented protocol and a connectionless protocol with one protocol.

The respective steps in the processing executed by each device described herein do not necessarily have to be processed chronologically in the order described as a sequence diagram or a flowchart. For example, the respective steps in the processes executed by each device may be processed in order different from the order described as a flowchart, or may be processed in parallel.

In addition, it is also possible to fabricate a computer program for causing hardware such as the CPU, ROM, and RAM built in each device to attain the same functions as those of the components of each device described above. In addition, it is possible to provide a storage medium having the computer program stored therein. In addition, configuring each of the functional blocks illustrated in the functional block diagrams by hardware makes it possible to allow the hardware to achieve the series of processes.

A preferred embodiment(s) of the present disclosure has/have been described above in detail with reference to the accompanying drawings, but the technical scope of the present disclosure is not limited to such an embodiment(s). It is apparent that a person having ordinary skill in the art of the present disclosure may arrive at various alterations and modifications within the scope of the technical idea described in the appended claims, and it is understood that such alterations and modifications naturally fall within the technical scope of the present disclosure.

Furthermore, the effects described herein are merely illustrative and exemplary, and not limitative. That is, the technology according to the present disclosure may exert other effects that are apparent to those skilled in the art from the description herein, in addition to the above-described effects or in place of the above-described effects.

### Reference Signs List

100, 200 Wireless communication device

## Claims

1. A wireless communication device (100) comprising:
an acquisition section (136, 138) configured to wirelessly acquire information from a communication partner (200); and
a communication controller (150) configured to perform control to
- include in a beacon frame, in response to a connectionless data transfer request from an upper layer, information indicating that the data to be transmitted in a connection establishment procedure is connectionless data and information indicating that data to be transmitted in the connection establishment procedure is data whose arrival is guaranteed,
- wirelessly transmit the beacon frame in the connection establishment procedure,
- receive data from the communication partner transmitted using an association request frame,
- include in an association response frame information indicating that data transfer is continued if it is determined to continue data transfer with the communication partner (200),
- wirelessly transmit the association response frame, and
- execute wireless data exchange procedure with the communication partner subsequently to the connection establishment procedure.

2. The wireless communication device according to claim 1, wherein, in the connection establishment procedure, the communication controller (150) is configured to perform control to further include in the association response frame information indicating that there is data to be transmitted through the data exchange procedure.

3. The wireless communication device according to any one of claims 1 to 2, wherein the acquisition section (136, 138) is configured to acquire information through wireless communication using an electric wave in a millimeter wave band.

4. A wireless communication device (200) comprising:
an acquisition section (136, 138) configured to wirelessly acquire information from a communication partner (100); and
a communication controller (150) configured to perform control to
- wirelessly receive a beacon frame in a connection establishment procedure from the communication partner,
- determine whether or not to include data in an association request frame to be wirelessly transmitted in the connection establishment procedure if the received beacon frame includes information indicating that the data to be transmitted in the connection establishment procedure is connectionless data and information indicating that data to be transmitted in the connection establishment procedure is data whose arrival is guaranteed,
- transmit data to the communication partner transmitted using the association request frame,
- wirelessly receive an association response frame from the communication partner, the association response frame including information indicating that data transfer is continued, and
- execute wireless data exchange with the communication partner subsequently to the connection establishment procedure.

5. The wireless communication device according to claim 4, wherein, if the information acquired by the acquisition section from the association response frame further includes information indicating that there is data to be transmitted through the data exchange procedure, the communication controller (150) is configured to perform control to execute the data exchange procedure subsequently to the connection establishment procedure.

6. The wireless communication device according to any one of claims 4 to 5, wherein the acquisition section (136, 138) is configured to acquire information through wireless communication using an electric wave in a millimeter wave band.

7. A wireless communication method comprising
wirelessly acquiring information from a communication partner, and performing control to
- include in a beacon frame, in response to a connectionless data transfer request from an upper layer, information indicating that the data to be transmitted in a connection establishment procedure is connectionless data and information indicating that data to be transmitted in the connection establishment procedure is data whose arrival is guaranteed,
- wirelessly transmit the beacon frame,
- receive data from the communication partner transmitted using an association request frame,
- include in an association response frame information indicating that data transfer is continued if it is determined to continue data transfer with the communication partner (200),
- wirelessly transmit the association response frame, and
- execute wireless data exchange procedure with the communication partner subsequently to the connection establishment procedure.

8. A wireless communication method comprising
wirelessly acquiring information from a communication partner, and performing control to
- wirelessly receive a beacon frame in a connection establishment procedure from the communication partner,
- determine whether or not to include data in an association request frame to be wirelessly transmitted in the connection establishment procedure if the received beacon frame includes information indicating that the data to be transmitted in the connection establishment procedure is connectionless data and information indicating that data to be transmitted in the connection establishment procedure is data whose arrival is guaranteed,
- transmit data to the communication partner transmitted using the association request frame,
- wirelessly receive an association response frame from the communication partner, the association response frame information indicating that data transfer is continued, and
- execute wireless data exchange with the communication partner subsequently to a connection establishment procedure.

9. A computer program for causing a computer to execute the wireless communication method defined in claim 7 or 8 when said computer program is executed on the computer.

## Patentansprüche

1. Drahtloskommunikationsvorrichtung (100), umfassend:
einen Erfassungsabschnitt (136, 138), der dafür ausgelegt ist, drahtlos Informationen von einem Kommunikationspartner (200) zu erfassen; und
eine Kommunikationssteuerung (150), die zum Durchführen von Steuerung zum Bewirken folgender Vorgänge ausgelegt ist:
- Einbeziehen in einen Beacon-Frame, als Antwort auf eine Anforderung zur verbindungslosen Datenübertragung von einer oberen Schicht, von Informationen, die angeben, dass die in einem Verbindungsaufbauverfahren zu sendenden Daten verbindungslose Daten sind, und von Informationen, die angeben, dass die im Verbindungsaufbauverfahren zu sendenden Daten Daten sind, deren Ankunft garantiert ist,
- drahtloses Senden des Beacon-Frames im Verbindungsaufbauverfahren,
- Empfangen von Daten vom Kommunikationspartner, die unter Verwendung eines "Association Request"-Frames gesendet werden,
- Einbeziehen, in einen "Association Response"-Frame, von Informationen, die angeben, dass die Datenübertragung fortgesetzt wird, wenn bestimmt wird, dass die Datenübertragung mit dem Kommunikationspartner fortgesetzt werden soll (200),
- drahtloses Senden des "Association Response"-Frames, und
- Ausführen eines Drahtlosdatenaustauschverfahrens mit dem Kommunikationspartner im Anschluss an das Verbindungsaufbauverfahren.

2. Drahtloskommunikationsvorrichtung nach Anspruch 1, wobei die Kommunikationssteuerung (150) dafür ausgelegt ist, beim Verbindungsaufbauverfahren Steuerung zu dem Zweck durchzuführen, in den "Association Response"-Frame ferner Informationen einzubeziehen, die angeben, dass Daten durch das Datenaustauschverfahren zu senden sind.

3. Drahtloskommunikationsvorrichtung nach einem der Ansprüche 1 bis 2, wobei der Erfassungsabschnitt (136, 138) dafür ausgelegt ist, Informationen durch Drahtloskommunikation unter Verwendung einer elektrischen Welle in einem Millimeterwellenband zu erfassen.

4. Drahtloskommunikationsvorrichtung (200), umfassend:
einen Erfassungsabschnitt (136, 138), der dafür ausgelegt ist, drahtlos Informationen von einem Kommunikationspartner (100) zu erfassen; und
eine Kommunikationssteuerung (150), die zum Durchführen von Steuerung zum Bewirken folgender Vorgänge ausgelegt ist:
- drahtloses Empfangen eines Beacon-Frames in einem Verbindungsaufbauverfahren vom Kommunikationspartner,
- Bestimmen, ob oder ob nicht Daten in einen "Association Request"-Frame einbezogen werden sollen, der drahtlos im Verbindungsaufbauverfahren gesendet werden soll, wenn der empfangene Beacon-Frame Informationen, die angeben, dass die im Verbindungsaufbauverfahren zu sendenden Daten verbindungslose Daten sind, und Informationen beinhaltet, die angeben, dass die im Verbindungsaufbauverfahren zu sendenden Daten Daten sind, deren Ankunft garantiert ist,
- Senden von Daten zum Kommunikationspartner, die unter Verwendung des "Association Request"-Frames gesendet werden,
- drahtloses Empfangen eines "Association Response"-Frames vom Kommunikationspartner, wobei der "Association Response"-Frame Informationen beinhaltet, die angeben, dass die Datenübertragung fortgesetzt wird, und
- Ausführen von Drahtlosdatenaustausch mit dem Kommunikationspartner im Anschluss an das Verbindungsaufbauverfahren.

5. Drahtloskommunikationsvorrichtung nach Anspruch 4, wobei, wenn die vom Erfassungsabschnitt aus dem "Association Response"-Frame erfassten Informationen ferner Informationen beinhalten, die angeben, dass Daten vorhanden sind, die durch das Datenaustauschverfahren gesendet werden sollen, die Kommunikationssteuerung (150) dafür ausgelegt ist, Steuerung zum Ausführen des Datenaustauschverfahrens im Anschluss an das Verbindungsaufbauverfahren durchzuführen.

6. Drahtloskommunikationsvorrichtung nach einem der Ansprüche 4 bis 5, wobei der Erfassungsabschnitt (136, 138) dafür ausgelegt ist, Informationen durch Drahtloskommunikation unter Verwendung einer elektrischen Welle in einem Millimeterwellenband zu erfassen.

7. Drahtloskommunikationsverfahren, umfassend:
drahtloses Erfassen von Informationen von einem Kommunikationspartner, und
Durchführen von Steuerung zum Bewirken folgender Vorgänge:
- Einbeziehen, in einen Beacon-Frame, als Antwort auf eine Anforderung zur verbindungslosen Datenübertragung von einer oberen Schicht, von Informationen, die angeben, dass die in einem Verbindungsaufbauverfahren zu sendenden Daten verbindungslose Daten sind, und von Informationen, die angeben, dass die im Verbindungsaufbauverfahren zu sendenden Daten Daten sind, deren Ankunft garantiert ist,
- drahtloses Senden des Beacon-Frames,
- Empfangen von Daten vom Kommunikationspartner, die unter Verwendung eines "Association Request"-Frames gesendet werden,
- Einbeziehen, in einen "Association Response"-Frame, von Informationen, die angeben, dass die Datenübertragung fortgesetzt wird, wenn bestimmt wird, dass die Datenübertragung mit dem Kommunikationspartner fortgesetzt werden soll (200),
- drahtloses Senden des "Association Response"-Frames, und
- Ausführen eines Drahtlosdatenaustauschverfahrens mit dem Kommunikationspartner im Anschluss an das Verbindungsaufbauverfahren.

8. Drahtloskommunikationsverfahren, umfassend:
drahtloses Erfassen von Informationen von einem Kommunikationspartner, und
Durchführen von Steuerung zum Bewirken folgender Vorgänge:
- drahtloses Empfangen eines Beacon-Frames in einem Verbindungsaufbauverfahren vom Kommunikationspartner,
- Bestimmen, ob oder ob nicht Daten in einen "Association Request"-Frame einbezogen werden sollen, der drahtlos im Verbindungsaufbauverfahren gesendet werden soll, wenn der empfangene Beacon-Frame Informationen, die angeben, dass die im Verbindungsaufbauverfahren zu sendenden Daten verbindungslose Daten sind, und Informationen beinhaltet, die angeben, dass die im Verbindungsaufbauverfahren zu sendenden Daten Daten sind, deren Ankunft garantiert ist,
- Senden von Daten zum Kommunikationspartner, die unter Verwendung des "Association Request"-Frames gesendet werden,
- drahtloses Empfangen eines "Association Response"-Frames vom Kommunikationspartner, wobei der "Association Response"-Frame Informationen beinhaltet, die angeben, dass die Datenübertragung fortgesetzt wird, und
- Ausführen von Drahtlosdatenaustausch mit dem Kommunikationspartner im Anschluss an ein Verbindungsaufbauverfahren.

9. Computerprogramm zum Veranlassen eines Computers, das in Anspruch 7 oder 8 definierte Drahtloskommunikationsverfahren durchzuführen, wenn das Computerprogramm auf dem Computer ausgeführt wird.

## Revendications

1. Dispositif de communication sans fil (100) comprenant :
une section d'acquisition (136, 138) configurée pour acquérir sans fil des informations auprès d'un partenaire de communication (200) ; et
un contrôleur de communication (150) configuré pour exécuter une commande destinée à :
inclure dans une trame de balise, en réponse à une demande de transfert de données sans connexion provenant d'une couche supérieure, des informations indiquant que les données à transmettre dans une procédure d'établissement de connexion sont des données sans connexion et des informations indiquant que les données à transmettre dans la procédure d'établissement de connexion sont des données dont l'arrivée est garantie,
transmettre sans fil la trame de balise dans la procédure d'établissement de connexion,
recevoir des données du partenaire de communication transmises à l'aide d'une trame de demande d'association, inclure, dans une trame de réponse d'association, des informations indiquant que le transfert de données est poursuivi s'il est déterminé de poursuivre le transfert de données avec le partenaire de communication (200),
transmettre sans fil la trame de réponse d'association, et
exécuter une procédure d'échange de données sans fil avec le partenaire de communication après la procédure d'établissement de connexion.

2. Dispositif de communication sans fil selon la revendication 1, dans lequel, dans la procédure d'établissement de connexion, le contrôleur de communication (150) est configuré pour exécuter une commande afin d'inclure en outre, dans la trame de réponse d'association, des informations indiquant que des données doivent être transmises par l'intermédiaire de la procédure d'échange de données.

3. Dispositif de communication sans fil selon l'une quelconque des revendications 1 et 2, dans lequel la section d'acquisition (136, 138) est configurée pour acquérir des informations par l'intermédiaire d'une communication sans fil à l'aide d'une onde électrique dans une bande d'ondes millimétriques.

4. Dispositif de communication sans fil (200) comprenant :
une section d'acquisition (136, 138) configurée pour acquérir sans fil des informations à partir d'un partenaire de communication (100) ; et
un contrôleur de communication (150) configuré pour exécuter une commande afin de :
recevoir sans fil une trame de balise dans une procédure d'établissement de connexion à partir du partenaire de communication,
déterminer s'il faut, ou non, inclure des données dans une trame de demande d'association à transmettre sans fil dans la procédure d'établissement de connexion si la trame de balise reçue comprend des informations indiquant que les données à transmettre dans la procédure d'établissement de connexion sont des données sans connexion et des informations indiquant que les données à transmettre dans la procédure d'établissement de connexion sont des données dont l'arrivée est garantie,
transmettre des données au partenaire de communication à l'aide de la trame de demande d'association,
recevoir sans fil une trame de réponse d'association de la part du partenaire de communication, la trame de réponse d'association comprenant des informations indiquant que le transfert de données se poursuit, et
exécuter un échange de données sans fil avec le partenaire de communication à la suite de la procédure d'établissement de connexion.

5. Dispositif de communication sans fil selon la revendication 4, dans lequel, si les informations acquises par la section d'acquisition à partir de la trame de réponse d'association comprennent en outre des informations indiquant que des données doivent être transmises par la procédure d'échange de données, le contrôleur de communication (150) est configuré pour exécuter une commande afin d'exécuter la procédure d'échange de données à la suite de la procédure d'établissement de connexion.

6. Dispositif de communication sans fil selon l'une quelconque des revendications 4 à 5, dans lequel la section d'acquisition (136, 138) est configurée pour acquérir des informations par l'intermédiaire d'une communication sans fil à l'aide d'une onde électrique dans une bande d'ondes millimétriques.

7. Procédé de communication sans fil comprenant les étapes suivantes :
acquérir sans fil des informations auprès d'un partenaire de communication, et
exécuter une commande pour :
inclure dans une trame de balise, en réponse à une demande de transfert de données sans connexion provenant d'une couche supérieure, des informations indiquant que les données à transmettre dans une procédure d'établissement de connexion sont des données sans connexion et des informations indiquant que les données à transmettre dans la procédure d'établissement de connexion sont des données dont l'arrivée est garantie,
transmettre sans fil la trame de balise,
recevoir des données du partenaire de communication transmises à l'aide d'une trame de demande d'association, inclure, dans une trame de réponse d'association, des informations indiquant que le transfert de données est poursuivi s'il est déterminé de poursuivre le transfert de données avec le partenaire de communication (200),
transmettre sans fil la trame de réponse d'association, et
exécuter une procédure d'échange de données sans fil avec le partenaire de communication après la procédure d'établissement de connexion.

8. Procédé de communication sans fil comprenant les étapes suivantes :
acquérir sans fil des informations auprès d'un partenaire de communication, et
exécuter une commande pour :
recevoir sans fil une trame de balise dans une procédure d'établissement de connexion à partir du partenaire de communication,
déterminer s'il faut ou non inclure des données dans une trame de demande d'association à transmettre sans fil dans la procédure d'établissement de connexion si la trame de balise reçue comprend des informations indiquant que les données à transmettre dans la procédure d'établissement de connexion sont des données sans connexion et des informations indiquant que les données à transmettre dans la procédure d'établissement de connexion sont des données dont l'arrivée est garantie,
transmettre des données au partenaire de communication à l'aide de la trame de demande d'association,
recevoir sans fil une trame de réponse d'association de la part du partenaire de communication, les informations de la trame de réponse d'association indiquant que le transfert de données se poursuit, et
exécuter un échange de données sans fil avec le partenaire de communication à la suite d'une procédure d'établissement de connexion.

9. Programme d'ordinateur destiné à amener un ordinateur à exécuter le procédé de communication sans fil défini dans la revendication 7 ou la revendication 8 lorsque ledit programme d'ordinateur est exécuté sur l'ordinateur.
